# EUROPÄISCHE PATENTSCHRIFT

(11) **EP 1 832 335 B1**
(45) Veröffentlichungstag und Bekanntmachung des Hinweises auf die Patenterteilung: **13.07.2011**
(21) Anmeldenummer: 07004432.6
(22) Anmeldetag: 05.03.2007
(51) Int. Cl.: B01F 11/00, B01F 15/00, G01P 15/00, C12M 1/02, B06B 1/02

(54) **Vorrichtung zum Mischen von Laborgefäß-Inhalten, aufweisend einen Beschleunigungssensor**
Device for mixing the contents of laboratory vessels, comprising an acceleration sensor
Dispositif de mélange de contenus de récipients de laboratoire, doté d'un capteur d'accélération

(30) Priorität: 09.03.2006 DE 102006011370
(43) Veröffentlichungstag der Anmeldung: 12.09.2007
(60) Teilanmeldung: 10011955.1
(73) Patentinhaber: EPPENDORF AG, 22339 Hamburg (DE)
(72) Erfinder: Ebers, Manfred, 25474 Bönningstedt (DE); Link, Holger, 22339 Hamburg (DE); Ruser, Oliver, 22305 Hamburg (DE); Mahlstedt, Ute, 22851 Norderstedt (DE)
(74) Vertreter: Rohnke, Christian

(56) Entgegenhaltungen:
- EP-A1- 0 694 785
- WO-A-2005/107931
- DE-U1-202004 008 470
- US-A- 5 593 228
- US-A1- 2006 177 936
- US-A1- 2006 187 743
- US-B2- 6 823 735

## Beschreibung

Die vorliegende Erfindung betrifft eine Vorrichtung zum Mischen von Laborgefäß-Inhalten mit einem Aufnahmeadapter mit einer Halterung zum Aufnehmen von Laborgefäßen in Wechselblöcken und einem Antrieb, durch den sich der Aufnahmeadapter in eine Mischbewegung versetzen lässt, die im wesentlichen in einer, insbesondere horizontalen, Ebene kreisförmig translatorisch oszillierend verläuft.

Mischvorrichtungen, in denen Gefäßinhalte vermengt werden, sind hinlänglich bekannt. Insbesondere für Labore gibt es Mischer, die auch kleine Flüssigkeitsmengen dadurch mischen können, dass kleine Behälter in geeigneten Haltern, so genannten "Wechselblöcken" auch in sehr großen Gruppen zwei-, drei- oder sogar vierstelliger Anzahl zusammengefasst sind. Solche Wechselblöcke und auch die Reaktionsgefäße können genormt sein. So gibt es zum Beispiel Reaktionsgefäße mit 0,2 ml, 0,5 ml, 1,5 ml und 2,0 ml Inhalt - sowie jeweils geeignete Wechselblöcke standarisiert dazu. Ferner gibt es zum Beispiel Wechselblöcke für Cryo-Gefäße, für Falcon-Gefäße (1,5 ml und 50 ml), für Glasgefäße und Bechergläser, für Microtiterplatten (MTP), für Deep Well Platten (DWP), für Slides und für PCR-Platten mit 96 wells. Diese Aufzählung ist nicht abschließend, deutet aber an, in welcher großen Vielfalt Laborgefäße existieren, für die die Mischer geeignet sein sollten. Zu diesem Zweck gibt es Standards und Normen der so genannten "Foot Prints" - nämlich der Sockelstruktur von Wechselblöcken. Ein Schüttelgerät für Probengefäße, insbesondere für Microtiterplatten, mit einer die Probengefäße haltenden Schwingplatte ist beispielsweise aus der WO 2005/107931 A1 bekannt.

Weil diese Wechselblöcke prinzipiell so aufgebaut sind, dass die Einzelgefäße von oben dort hinein gesteckt werden, hat sich für die bekannten Mischer eine kreisförmig translatorisch oszillierende Mischbewegung etabliert, die im wesentlichen in einer horizontalen Ebene abläuft. Zu diesem Zweck ist bei den bekannten Mischern in aller Regel ein elektromotorischer Umwuchtantrieb dafür zuständig, einen "Tisch" in diese kreisförmige Bewegung zu versetzen. Letzterer ist dazu in bekanntlich unterschiedlicher Weise gelagert: Bekannt ist zum Beispiel eine Lagerung in Linear-Wälzlagern (so genannten Kugelbüchsen) in den beiden horizontalen Richtungen, bekannt ist aber auch eine Filmscharnierlagerung. Alternativ gibt es auch elektromagnetische Lagerung oder Lagerung mit Piezo-Elementen, die jeweils auch gleich als Antrieb dienen können. Üblicherweise werden solche Mischer mit einer Drehfrequenz von 200 U/min bis 1.500 U/min angetrieben. Abhängig von der für das Mischgut erforderlichen Mischung, aber auch von misch-mechanischen Parametern ist die Frequenz der Mischbewegung bekanntlich einstellbar. So kann mit einer geeigneten Mischfrequenz bekanntlich auch darauf reagiert werden, ob eine besonders leichte oder besonders schwere Beladung des Mischers gemischt werden soll. Oder deren Eigenfrequenz kann als Mischfrequenz vermieden werden, indem die Mischfrequenz etwas verändert wird, falls der Mischer sich "aufzuschwingen" beginnt. Aus der DE202004008470 U1 ist beispielsweise eine automatische Regelung auf die Resonanzfrequenz der Schwingung des zu mischenden Guts bekannt, wobei diese Schwingung von einem Sensor erfasst wird. In der WO2005/10793 A1 wird die Schwingplatte, die die Probengefäße hält, in Resonanzschwingung versetzt, indem ihr Schwingverhalten am Erregerantrieb ermittelt wird.

Der vorliegenden Erfindung liegt demgegenüber die Aufgabe zugrunde, eine Mischvorrichtung zu schaffen, die noch betriebssicherer ist.

Diese Aufgabe wird von einer Vorrichtung zum Mischen mit den Merkmalen des Anspruchs 1 gelöst. Bevorzugte Ausgestaltungen sind in den Unteransprüchen angegeben.

Erfindungsgemäß ist eine Mischvorrichtung für Laborgefäß-Inhalte mit einem Aufnahme-Adapter und einem Antrieb versehen. Der Aufnahme-Adapter weist eine Halterung auf, die geeignet ist, Gefäße aufzunehmen. Dies soll vorzugsweise heißen, dass die Gefäße sich in die Halterung des Aufnahme-Adapters so einbringen lassen, dass sie sich während der Mischbewegung, in die der Aufnahme-Adapter sich mittels des Antriebs versetzen lässt, in ungestörtem Betrieb nicht von allein befreien. Insbesondere für Laborgefäße in Wechselblöcken genügt die Halterung des Aufnahme-Adapters vorzugsweise bestimmten Standards.

Der Antrieb der erfindungsgemäßen Mischvorrichtung ist in der Lage, den Aufnahmeadapter in eine Mischbewegung zu versetzen, die im wesentlichen kreisförmig translatorisch oszillierend in einer Ebene verläuft. Mit anderen Worten kann eine solche erfindungsgemäße Mischbewegung dadurch beschrieben werden, dass zwei (gedachte) Punkte des Aufnahme-Adapters eine Kreisbewegung mit im wesentlichen gleicher Winkelposition, gleicher Winkelgeschwindigkeit und gleichem Radius ausführen. Vorzugsweise verläuft die Mischbewegung in einer horizontalen Ebene - so dass ein darin aufgenommener Wechselblock mit seinen senkrecht stehenden Reaktionsgefäßen gemischt wird.

Die erfindungsgemäße Vorrichtung ist gekennzeichnet durch einen Sensor, der in der Lage ist, eine vektorielle Größe zu messen, von welcher die Masse einer Beladung des Aufnahme-Adapters abhängig ist.

Diese Messung kann erfindungsgemäß statisch sein - zum Beispiel mittels einer Wägezelle als erfindungsgemäßen Sensor, die etwa mittels Dehnungsmessstreifen die Massenänderung nach der Beladung des Aufnahme-Adapters signalisiert - oder aber dynamisch - wenn zum Beispiel ein Beschleunigungssensor, etwa Piezo-basiert, die Beschleunigung während der Mischbewegung an einem Bauteil der erfindungsgemäßen Vorrichtung mindestens in einer Raumrichtung misst.

Durch diese erfindungsgemäße automatische Ermittlung der Masse der Beladung der Mischvorrichtung lassen sich erfindungsgemäß durch geeignete Steuerungsvorrichtungen dynamische Parameter der durch den Antrieb erzeugten Mischbewegung des Aufnahme-Adapters einstellen. In dem einfachen Beispiel, die statische Masse der Beladung erfindungsgemäß mittels Wägezelle zu bestimmen, kann eine solche erfindungsgemäße Steuerungsvorrichtung Antriebsparameter so einstellen, dass für diese Masse - zum Beispiel gemäß Vorversuchen - eine geeignete Mischbewegung zustande kommt, oder zumindest die Auswahl von solchen Misch-Bewegungsparametern blockieren, die mit dieser Beladung zu einer Störung führen könnten. Beim erfindungsgemäß alternativ - oder kumulativ - möglichen Messen dynamischer Beschleunigung kann erfindungsgemäß eine Auswertevorrichtung insbesondere den zeitlichen Verlauf der gemessenen Schwingung analysieren und daraus zum Beispiel auch einen Ausnahmezustand wie zum Beispiel einen Defekt des Antriebs oder der Lagerung von beweglichen Teilen der Vorrichtung feststellen. Eine solche erfindungsgemäße Auswertevorrichtung kann aus der Schwingungsanalyse jedenfalls auch ebenfalls die Masse der Beladung des Aufnahme-Adapters ermitteln. Sollte zusätzlich zu dem dynamischen Sensor auch ein erfindungsgemäßer zweiter Sensor zum Beispiel zur statischen direkten Ermittlung der Masse der Beladung in die Vorrichtung eingebaut sein, kann aus einem Vergleich der Signale dieser beiden Sensoren ebenfalls mittels einer erfindungsgemäßen Auswertevorrichtung Rückschluss über den Betriebszustand der Vorrichtung gezogen werden und Entsprechendes an einer Steuerung, Regelung und/oder Anzeige signalisiert werden.

Die Messung der vektoriellen Größe erfolgt mittels des Sensors vorzugsweise in Richtung normal zu der Ebene, in der die Mischbewegung (kreisförmig translatorisch oszillierend) verläuft, aber auch andere Orientierungen des Sensors sind erfindungsgemäß alternativ oder zusätzlich möglich. So gibt es insbesondere Piezo-Beschleunigungssensoren serienmäßig, die Beschleunigungen in allen drei Raumrichtungen messen. Ein solcher Sensor ist erfindungsgemäß einsetzbar, und zwar vorzugsweise mit einer Mess-Hauptrichtung des Sensors rechtwinklig zu der Mischbewegungsebene orientiert.

Weitere Vorteile und Merkmale der vorliegenden Erfindung werden im Folgenden mit Bezug auf die beigefügten Zeichnungen, die ein Ausführungsbeispiel der Erfindung darstellen, beschrieben.
- **Figur 1**: zeigt eine räumliche Ansicht einer erfindungsgemäßen Vorrichtung zum Mischen und
- **Figur 2**: zeigt eine Seitenansicht der Vorrichtung gemäß Figur 1 ohne das Gehäuseoberteil.

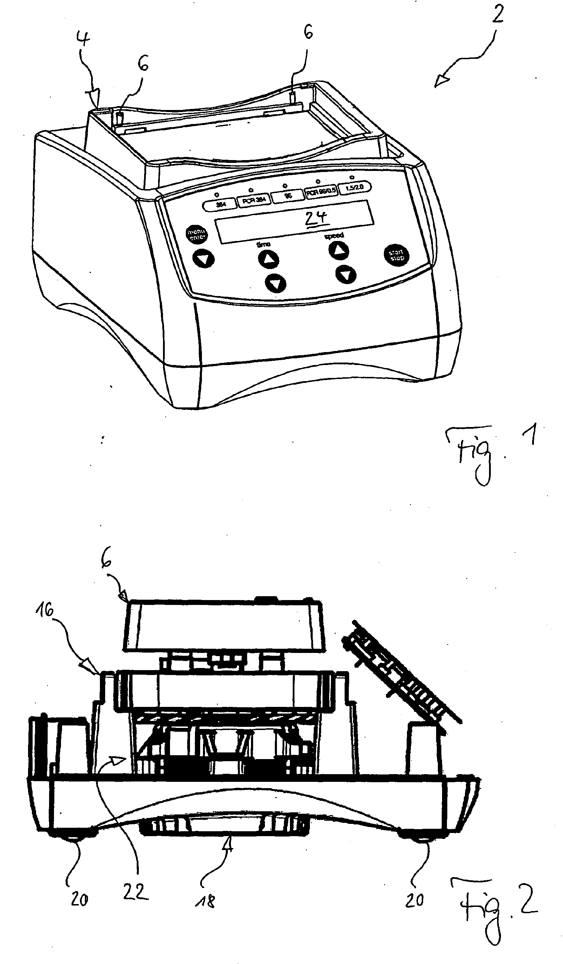

In **Figur 1** ist eine Mischvorrichtung **2** erkennbar mit einem oberseitigen, rahmenförmigen Aufnahme-Adapter **4,** der eine Halterung **6** zum Aufnehmen von Wechselblöcken aufweist.

In **Figur 2** ist als Seitenansicht der innere Aufbau der Vorrichtung zum Mischen gemäß Figur 1 gut erkennbar. Insbesondere sieht man deutlich den Aufnahmeadapter **6** oberhalb der übrigen Vorrichtung. Er bewegt sich im Betrieb der Vorrichtung 2 in einer horizontalen Bewegungsebene kreisförmig translatorisch osziellierend gegenüber dem Chassis **16,** an dem auch der Antrieb **18** für diese Mischbewegung befestigt ist. Ferner ist in der Seitenansicht gemäß Figur 2 erkennbar, dass das Chassis **16** auf Füßen **20** steht. Diese sind elastisch zum Beispiel aus Gummi. Es hat sich nun erfindungsgemäß als vorteilhaft erwiesen, den Beschleunigungssensor **22** nicht an einem bewegten Bauteil der Vorrichtung zu installieren - also insbesondere nicht an dem Aufnahme-Adapter **6** selbst, obwohl dieser die Mischbewegung ausführt - sondern an einem der übrigen Bauteile der Vorrichtung, die der Mischbewegung nicht (in ihrem vollen Ausmaß) folgen, z. B. auf die Leiterplatte selbst oder auf benachbarte Gehäuseteile. Denn als Reaktion der Mischbewegung schwingen auch diese übrigen Bauteile, insbesondere ermöglicht durch eine elastische Lagerung auf den elastischen Füßen **20**, über einem möglicherweise starren Untergrund, auf dem die Vorrichtung **2** steht. Dieses Anbringen des Sensors **22** auf einem zur Mischbewegung nicht eigentlich angetriebenen Bauteil aber erspart es, die Verkabelung des Sensors **22** beweglich auszuführen - wie es erforderlich wäre, wenn sich der Sensor mitbewegte.

Auf der Vorderseite des Gehäuses der Mischvorrichtung **2** ist in **Figur 1** eine Anzeige **24** erkennbar. Darauf lassen sich verschiedene Auswerteergebnisse aus der Analyse des Sensorsignals anzeigen wie zum Beispiel das Gewicht der Beladung des Aufnahme-Adapters **6** oder ein Notsignal (das übrigens auch durch einen Lautsprecher (nicht dargestellt) akustisch ergänzt werden kann) bei einer Überladung der Mischvorrichtung **2**.

## Patentansprüche

1. Vorrichtung zum Mischen (2) von Laborgefäß-Inhalten mit
- einem Aufnahme-Adapter (4) mit einer Halterung (6) zum Aufnehmen von Laborgefäßen in Wechselblöcken, und
- einem Antrieb (18), durch den sich der Aufnahme-Adapter in eine Mischbewegung versetzen lässt, die im wesentlichen in einer horizontalen Ebene kreisförmig translatorisch oszillierend verläuft,
**gekennzeichnet durch**
- einen Sensor (22), der eine vektorielle, von der Masse einer Beladung des Aufnahme-Adapters abhängige Größe misst und der die Schwingung nicht an einem Bauteil der Vorrichtung, das der Antrieb in die Mischbewegung versetzt, insbesondere nicht an dem Aufnahme-Adapter (4), misst sondern an einem der übrigen Bauteile der Vorrichtung (2).

2. Mischvorrichtung nach dem vorhergehenden Anspruch, **dadurch gekennzeichnet, dass** der Sensor (22) die Größe in Richtung normal zu der Ebene misst.

3. Mischvorrichtung nach einem der vorhergehenden Ansprüche, **dadurch gekennzeichnet, dass** der Sensor (22) die Beschleunigung der Vorrichtung bei der Mischbewegung misst.

4. Mischvorrichtung nach einem der vorhergehenden Ansprüche, **dadurch gekennzeichnet, dass** der Sensor (22) die Schwingung an einem Chassis (16) der Vorrichtung misst.

5. Mischvorrichtung nach einem der vorhergehenden Ansprüche, **gekennzeichnet durch** Füße (20), auf denen die Vorrichtung elastisch gelagert steht.

6. Mischvorrichtung nach einem der vorhergehenden Ansprüche, **dadurch gekennzeichnet, dass** der Sensor (22) ein Beschleunigungssensor, insbesondere Piezobasiert, ist.

7. Mischvorrichtung nach einem der vorhergehenden Ansprüche, **dadurch gekennzeichnet, dass** der Sensor (22) auch die Schwingungen in Richtung der Ebene der Mischbewegung misst.

8. Mischvorrichtung nach einem der vorhergehenden Ansprüche, **gekennzeichnet durch** eine Auswertevorrichtung, die aus dem Signal des Sensors einen Ausnahmezustand feststellt und signalisiert.

9. Mischvorrichtung nach einem der vorhergehenden Ansprüche, **dadurch gekennzeichnet, dass** der Sensor (22) eine, insbesondere negative, Dehnung aufgrund der Masse mindestens eines Teils der Vorrichtung einschließlich einer Beladung des Aufnahme-Adapters misst.

10. Mischvorrichtung nach einem der vorhergehenden Ansprüche, **gekennzeichnet durch** eine Auswertevorrichtung, die aus dem Signal des Sensors das Gewicht einer Beladung des Aufnahme-Adapters ermittelt.

11. Mischvorrichturig nach dem vorhergehenden Anspruch, **gekennzeichnet durch** eine Anzeige des Gewichts.

12. Mischvorrichtung nach einem der vorhergehenden Ansprüche, **gekennzeichnet durch** ein Notsignal und/oder eine Notaus-Schaltung beim Überschreiten eines Grenzwertes.

13. Mischvorrichtung nach einem der vorhergehenden Ansprüche, **gekennzeichnet durch** eine Steuerungsvorrichtung, die die Frequenz und/oder die Amplitude der Mischbewegung abhängig von der gemessenen Größe automatisch einstellt.

## Claims

1. Apparatus for mixing (2) laboratory vessel contents said apparatus having
- an accommodating adapter (4) having a holder (6) for accommodating laboratory vessels in exchangeable vessel racks, and
- a drive (18) which can be used to put the accommodating adapter into a mixing movement which essentially oscillates in a circular and translatory manner in a horizontal plane,
**characterized by**
- a sensor (22) which measures a vectorial variable which is dependent on the mass of a load of the accommodating adapter and which measures the oscillation at one of the other components of the apparatus (2) rather than at a component of the apparatus which is put by the drive into the mixing movement, in particular rather than at the accommodating adapter (4).

2. Mixing apparatus according to the preceding claim, **characterized in that** the sensor (22) measures the variable in a direction normal to the plane.

3. Mixing apparatus according to one of the preceding claims, **characterized in that** the sensor (22) measures the acceleration of the apparatus during the mixing movement.

4. Mixing apparatus according to one of the preceding claims, **characterized in that** the sensor (22) measures the oscillation at a chassis (16) of the apparatus.

5. Mixing apparatus according to one of the preceding claims, **characterized by** feet (20) on which the apparatus is elastically mounted.

6. Mixing apparatus according to one of the preceding claims, **characterized in that** the sensor (22) is an acceleration sensor, in particular one based on a piezoelectric effect.

7. Mixing apparatus according to one of the preceding claims, **characterized in that** the sensor (22) also measures the oscillations in the direction of the plane of the mixing movement.

8. Mixing apparatus according to one of the preceding claims, **characterized by** an evaluation apparatus which uses the signal from the sensor to determine and signal an exceptional state.

9. Mixing apparatus according to one of the preceding claims, **characterized in that** the sensor (22) measures, in particular, negative strain on the basis of the mass of at least one part of the apparatus including a load of the accommodating adapter.

10. Mixing apparatus according to one of the preceding claims, **characterized by** an evaluation apparatus which uses the signal from the sensor to determine the weight of a load of the accommodating adapter.

11. Mixing apparatus according to the preceding claim, **characterized by** a display of the weight.

12. Mixing apparatus according to one of the preceding claims, **characterized by** an emergency signal and/or emergency disconnection when a limiting value is exceeded.

13. Mixing apparatus according to one of the preceding claims, **characterized by** a control apparatus which automatically sets the frequency and/or the amplitude of the mixing movement on the basis of the variable measured.

## Revendications

1. Dispositif pour mélanger (2) le contenu d'un récipient de laboratoire comprenant :
- un adaptateur d'accueil (4) muni d'un support (6) pour accueillir des récipients de laboratoire en blocs interchangeables et
- un mécanisme d'entraînement (18) par le biais duquel l'adaptateur d'accueil peut être mis dans un mouvement de mélange qui se déroule pour l'essentiel sous la forme d'une oscillation translatoire circulaire dans un plan horizontal,
**caractérisé par**
- un capteur (22) qui mesure une grandeur vectorielle dépendante de la masse d'un chargement de l'adaptateur d'accueil et qui mesure l'oscillation non pas sur un composant du dispositif qui amène le mécanisme d'entraînement dans le mouvement de mélange, notamment pas sur l'adaptateur d'accueil (4), mais sur l'un des autres composants du dispositif (2).

2. Dispositif de mélange selon la revendication précédente, **caractérisé en ce que** le capteur (22) mesure la grandeur dans la direction normale au plan.

3. Dispositif de mélange selon l'une des revendications précédentes, **caractérisé en ce que** le capteur (22) mesure l'accélération du dispositif lors du mouvement de mélange.

4. Dispositif de mélange selon l'une des revendications précédentes, **caractérisé en ce que** le capteur (22) mesure l'oscillation au niveau d'un châssis (16) du dispositif.

5. Dispositif de mélange selon l'une des revendications précédentes, **caractérisé par** des pieds (20) sur lesquels le dispositif repose de manière souple.

6. Dispositif de mélange selon l'une des revendications précédentes, **caractérisé en ce que** le capteur (22) est un capteur d'accélération, notamment à base piézoélectrique.

7. Dispositif de mélange selon l'une des revendications précédentes, **caractérisé en ce que** le capteur (22) mesure également les oscillations dans la direction du plan du mouvement de mélange.

8. Dispositif de mélange selon l'une des revendications précédentes, **caractérisé par** un dispositif d'interprétation qui constate un état d'exception à partir du signal du capteur et le signale.

9. Dispositif de mélange selon l'une des revendications précédentes, **caractérisé en ce que** le capteur (22) mesure une expansion, notamment négative, en raison de la masse d'au moins une partie du dispositif, y compris un chargement de l'adaptateur d'accueil.

10. Dispositif de mélange selon l'une des revendications précédentes, **caractérisé par** un dispositif d'interprétation qui, à partir du signal du capteur, détermine le poids d'un chargement de l'adaptateur d'accueil.

11. Dispositif de mélange selon l'une des revendications précédentes, **caractérisé par** un affichage du poids.

12. Dispositif de mélange selon l'une des revendications précédentes, **caractérisé par** un signal d'urgence et/ou un circuit d'arrêt d'urgence en cas de dépassement d'une valeur limite.

13. Dispositif de mélange selon l'une des revendications précédentes, **caractérisé par** un dispositif de commande qui règle automatiquement la fréquence et/ou l'amplitude du mouvement de mélange en fonction de la grandeur mesurée.
